(19) Europäisches Patentamt
European Patent Office
Office européen des brevets

(11) **EP 3 429 208 A1**

(12) **EUROPEAN PATENT APPLICATION**

(43) Date of publication:
**16.01.2019 Bulletin 2019/03**

(51) Int Cl.:
*H04N 19/597* (2014.01)    *G06T 17/00* (2006.01)
*G06T 17/10* (2006.01)    *G06T 9/40* (2006.01)
*H04N 19/96* (2014.01)

(21) Application number: **17305929.6**

(22) Date of filing: **13.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LASSERRE, Sebastien**
  **35576 CESSON-SEVIGNE (FR)**
• **RICARD, Julien**
  **35576 CESSON-SEVIGNE (FR)**
• **GUEDE, Celine**
  **35576 CESSON-SEVIGNE (FR)**

(74) Representative: **Huchet, Anne et al**
**InterDigital CE Patent Holdings**
**20, rue Rouget de Lisle**
**92130 Issy-les-Moulineaux (FR)**

(54) **A METHOD AND APPARATUS FOR ENCODING/DECODING A COLORED POINT CLOUD REPRESENTING THE GEOMETRY AND COLORS OF A 3D OBJECT**

(57)    The present principles relates to a method and device for encoding an input colored point cloud representing the geometry and colors of a 3D object. The method comprises:
- determining (100) which faces ($F_{i,j}$) of cubes ($C_j$) of an octree-based structure of projection are selected according to the orthogonal projections of the input colored point cloud onto these faces;
- obtaining (120) a pair of one texture image ($TI_{i,j}$) and one depth ($DI_{i,j}$) image for each of the selected faces ($F_{i,j}$) by orthogonally projecting, onto a selected face ($F_{i,j}$) of a cube ($C_j$), the part of the input colored point cloud included in said cube ($C_j$); and
- encoding (130) the texture images ($\{TI_{i,j}\}$) and the depth images ($\{DI_{i,j}\}$).

Fig. 1

## Description

### 1. Field.

The present principles generally relate to coding and decoding of a colored point cloud representing the geometry and colors of a 3D object. Particularly, but not exclusively, the technical field of the present principles are related to encoding/decoding of 3D image data that uses a texture and depth projection scheme.

### 2. Background.

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair, fur that may not be represented efficiently by other data format like meshes. Each point of a point cloud is often defined by a 3D spatial location (X, Y, and Zcoordinates in the 3D space) and possibly by other associated attributes such as color, represented in the RGB or YUV color space for example, a transparency, a reflectance, a two-component normal vector, etc.

In the following, a colored point cloud is considered, i.e. a set of 6-component points (X, Y, Z, R, G, B) or equivalently (X, Y, Z, Y, U, V) where (X,Y,Z) defines the spatial location of a point in a 3D space and (R,G,B) or (Y,U,V) defines a color of this point.

Colored point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, colored point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decision based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of sensed object and may help the decision.

Virtual Reality (VR) and immersive worlds have become a hot topic recently and foreseen by many as the future of 2D flat video. The basic idea is to immerse the viewer in an environment all round him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic colored point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches project a colored point cloud representing the geometry and colors of a 3D object, onto the faces of a cube encompassing the 3D object to obtain videos on texture and depth, and code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I).

Performance of compression is close to video compression for each projected point, but some contents may be more complex because of occlusions, redundancy and temporal stability when dynamic point clouds are considered. Consequently, point cloud compression is more demanding than video compression in term of bit-rates.

Regarding occlusions, it is virtually impossible to get the full geometry of a complex topology without using many projections. The required resources (computing power, storage memory) for encoding/decoding all these projections are thus usually too high.

Regarding redundancy, if a point is seen twice on two different projections, then its coding efficiency is divided by two, and this can easily get much worse if a high number of projections is used. One may use non-overlapping patches before projection, but this makes the projected partition boundary unsmooth, thus hard to code, and this negatively impacts the coding performance.

Regarding temporal stability, non-overlapping patches before projection may be optimized for an object at a given time but, when this object moves, patch boundaries also move and temporal stability of the regions hard to code (= the boundaries) is lost. Practically, one gets compression performance not much better than all-intra coding because the temporal inter prediction is inefficient in this context.

Therefore, there is a trade-off to be found between seeing points at most once but with projected images that are not well compressible (bad boundaries), and getting well compressible projected images but with some points seen several times, thus coding more points in the projected images than actually belonging to the model.

### 3. Summary.

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles relate to an architecture of a coding scheme that encodes texture and depth images obtained by orthogonally projecting a colored point cloud on the faces of cubes of an octree-based structure of projection.

Using a cascade of projections driven by an octree-based structure of projection allows to better encode parts of the 3D object that are usually missed or encoded using a lot of independent projections. High compression performance is then obtained compared to the prior art especially when the texture and depth are encoded by a legacy video codec, because the coding scheme then benefits from the high coding efficiency of this legacy codec provided by temporal inter prediction or arithmetic coding for example.

The present principles relate to a method and a device for encoding an input colored point cloud representing the geometry and colors of a 3D object. The method comprises:

- determining which faces of cubes of an octree-based structure of projection are selected according to the orthogonal projections of the input colored point cloud onto these faces;
- obtaining a pair of one texture image and one depth image for each of the selected faces by orthogonally projecting, onto a selected face of a cube, the part of the input colored point cloud included in said cube; and
- encoding the texture images and the depth images.

According to an embodiment, a face of a cube is based on a metric representative of the capability of a texture and a depth images associated with said face to efficiently compress the projection of the points of the input colored point cloud which are included in the cube, onto the face.

According to an embodiment, the method also comprises a step of or the device comprises means for encoding projection information data representative of the set of selected faces and/or representative of the octree-based structure of projection.

According to an embodiment, projection information data comprises a node information data indicating whether a cube associated with a node of the octree-based structure of projection is split or not, and a face information data indicating which face(s) of a cube(s) is (are) used for the projection(s).

According to an embodiment, encoding the texture images and the depth images comprises packing the texture images into a composite texture image and the depth images into a composite depth image, and encoding the composite texture and depth images.

According to an embodiment, the method also comprises a step of or the device also comprises means for encoding a packing information data representative of the packing of the texture images into the composite texture image and the depth images into the composite depth image.

According to another of their aspects, the present principles relate to a method and a device for decoding a colored point cloud representing the geometry and colors of a 3D object from at least one bitstream. The method comprises:

- decoding, from a bitstream, at least one encoded texture images and at least one encoded depth images to obtain at least one decoded texture images and at least one decoded depth images; and
- obtaining an inverse-projected colored point cloud by orthogonally inverse-projecting said at least one decoded texture images and said at least one decoded depth images, said inverse-projection being driven by projection information data representative of an octree-based structure of projection and representative of at least one selected faces of cubes of said octree-based structure of projection.

According to an embodiment, the method also comprises a step of or the device also comprises means for decoding, from a bitstream, projection information data representative of the set of selected faces and/or representative of the octree-based structure of projection.

According to an embodiment, decoding at least one encoded texture image and at least one encoded depth image comprises decoding a composite texture image and a composite depth image, and unpacking said at least one decoded texture image and said at least one decoded depth image the decoded composite texture image and the decoded composite depth image according to packing information data.

According to an embodiment, the method also comprises a step or the device also comprises means for decoding said packing information data.

According to another of their aspects, the present principles relate to a signal carrying on at least one pair of one texture image and one depth image obtained by orthogonally projecting points of an input colored point cloud onto a selected face of an octree-based structure of projection.

According to an embodiment, the signal also carries projection information data representative of the selected faces and/or representative of the octree-based structure of projection.

According to an embodiment, the signal also carries packing information data representative of the packing of at least one texture images into a composite texture image and the depth images into the composite depth image.

The specific nature of the present principles as well as other objects, advantages, features and uses of the present principles will become evident from the following description of examples taken in conjunction with the accompanying drawings.

## 4. Brief Description of Drawings.

In the drawings, examples of the present principles are illustrated. It shows:

- **Fig. 1** shows schematically a diagram of the steps of the method for encoding a colored point cloud representing the geometry and colors of a 3D object in accordance with an example of the present principles;
- **Fig**. 2 illustrates an example of an octree-based structure;
- **Fig**. 3 shows a diagram of the sub-steps of the step 100 in accordance with an embodiment of the present principles;
- **Fig. 4** shows a diagram of the sub-steps of the step 130 in accordance with an embodiment of the present principles;
- **Fig. 5** illustrates an example of an octree-based structure of projection and packing;
- **Fig. 6** shows a diagram of the sub-steps of the step 110 in accordance with an embodiment of the present principles;
- **Fig. 7** shows schematically a diagram of the steps of the method for decoding, from at least one bitstream, a colored point cloud representing the geometry and colors of a 3D object in accordance with an example of the present principles;
- **Fig. 8** shows an example of an architecture of a device in accordance with an example of present principles; and
- **Fig. 9** shows two remote devices communicating over a communication network in accordance with an example of present principles;
- **Fig. 10** shows the syntax of a signal in accordance with an example of present principles.

Similar or same elements are referenced with the same reference numbers.

## 6. Description of Example of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding a colored point cloud but extends to the encoding/decoding of a sequence of colored point clouds because each colored point cloud of the sequence is sequentially encoded/decoded as described below.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **nv** values, where **nv** is the number of components. Each value of a vector is represented with a number of bits which defines a maximal dynamic range of the pixel values.

A texture image is an image whose pixel values represents colors of 3D points and a depth image is an image whose pixel values depths of 3D points. Usually, a depth image is a grey levels image.

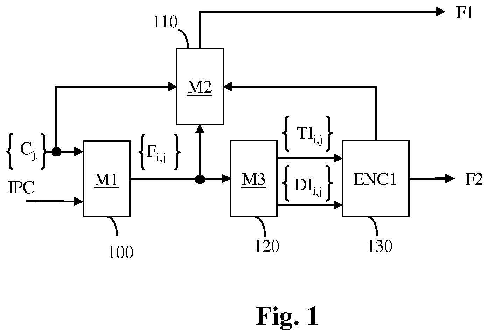

**Fig. 1** shows schematically a diagram of the steps of the method for encoding an input colored point cloud IPC representing the geometry and colors of a 3D object.

In step 100, a module M1 determines which faces $F_{i,j}$ of cubes $C_j$ of an octree-based structure of projection are selected according to the orthogonal projections of the input colored point cloud IPC onto these faces.

The selected faces $F_{i,j}$ form a set $\{F_{i,j}\}$ of selected faces.

The index **i** refers to the index of a face (1-6) and the index **j** refers to the index of a cube of said octree-based structure of projection.

An octree-based structure of projection is an octree in which each parent node may comprise at most eight children nodes and in which a cube is associated with each of this node. A root node (depth 0) is the unique node without any parent node and each child node (depth greater than 0) has a single parent node.

An octree-based structure of projection may be obtained by splitting recursively an initial cube associated with the root node and encompassing the input colored point cloud IPC. Thus, an octree-based structure of projection comprises a set $\{C_j\}$ of at least one cube $C_j$ associated with node(s).

A stopping condition for the splitting process may be checked when a maximum octree depth is reached or when the size of a cube, associated with a node, is smaller than a threshold or when the number of points of the input point cloud 3D included in the cube does not exceed a minimum number.

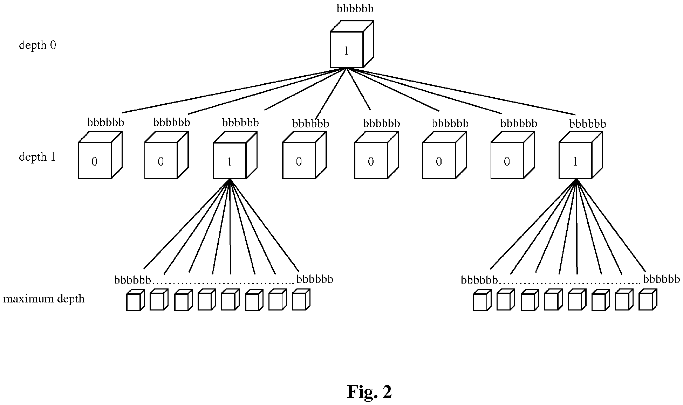

In the example illustrated on **Fig. 2,** the cube associated with the root node (depth 0) is split into 8 sub-cubes (depth 1) and two sub-cubes of depth 1 are then split into 8 sub-cubes (last depth = maximum depth = 2).

The sizes of the cubes of a same depth are usually the same but the present principles are not limited to this example. A specific process may also determine different numbers of sub-cubes per depth, when a cube is split, and/or multiple sizes of cubes of a same depth or according to their depths.

Optionally, in step 110, a module M2 encodes projection information data representative of the set of selected faces.

In a variant of step 110, the module M2 encodes projection information data representative of the octree-based structure of projection.

Projection information data drive both the projection of the input colored point cloud IPC onto the selected faces and the inverse projection of the selected faces to obtain an inverse-projected colored point cloud IPPC.

The encoded projection information data may be stored and/or transmitted in a bitstream F1.

In step 120, a module M3 obtains a pair of one texture image $TI_{i,j}$ and one depth image $DI_{i,j}$ for each selected face $F_{i,j}$ by orthogonally projecting, onto a selected face $F_{i,j}$ of a cube $C_j$, the points of the input colored point cloud IPC that are included in the cube $C_j$.

The orthogonal projection projects 3D points included in a cube $C_j$ onto one of its face $F_{i,j}$ to create a texture image $TI_{i,j}$ and a depth image $DI_{i,j}$. The resolution of the created texture and depth images may be identical to the cube resolution, for instance points in a 16x16x16 cube are projected on a 16x16 pixel image. By permutation of the axes, one may assume without loss of generality that a face is parallel to the XY plane. Consequently, the depth (i.e. the distance to the face) of a point is obtained by the component Z of the position of the point when the depth value Zface of the face equals 0 or by the distance between the component Z and the depth value Zface of the face.

At the start of the projection process, the texture image may have a uniform predetermined color (grey for example) and the depth image may have a uniform predetermined depth value (a negative value -D for instance). A loop on all points included in the cube is performed. For each point at position (X,Y,Z), if the distance Z - Zface of the point to the face is strictly lower than the depth value of the collocated (in the sense of same X and same Y) pixel in the depth image, then said depth value is replaced by Z - Zface and the color of the collocated pixel the texture image is replaced by the color of said point. After the loop is performed on all points, all depth values of the depth image may be shifted by an offset +D. Practically, the value Zface, the origin for X and Y for the face, as well as the cube position relatively to the face, are obtained from the projection information data.

The offset D is used to discriminate pixels of the images that have been projected (depth is strictly positive) or not (depth is zero).

The projection process is not limited to the above described process that is provided as an exemplary embodiment only.

The texture images $TI_{i,j}$ form a set $\{TI_{i,j}\}$ of texture images and the depth images $DI_{i,j}$ form a set $\{DI_{i,j}\}$ of depth images.

In step 130, an encoder ENC1 encodes the set $\{TI_{i,j}\}$ of at least one texture images and the set $\{DI_{i,j}\}$ of at least one depth images.

The encoded texture and depth images may be stored and/or transmitted in a bitstream F2.

According to an embodiment of step 100, the module M1 determines which faces $F_{i,j}$ of each cube $C_j$ of the set $\{C_j\}$ are selected according to a metric $Q(F_{i,j})$ representative of the capability of a texture ($TI_{i,j}$) and a depth ($DI_{i,j}$) images associated with a face $F_{i,j}$ of a cube $C_j$ to efficiently compress the projection of the points, of the input colored point cloud which are included in the cube $C_j$, onto the face $F_{i,j}$.

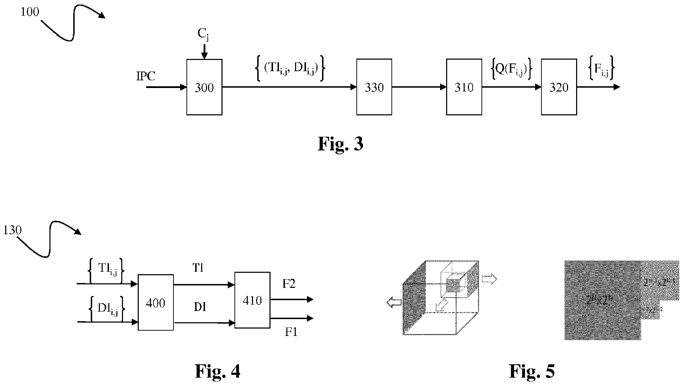

**Fig. 3** shows a diagram of the sub-steps of the step 100 in accordance with an embodiment of the present principles.

In step 300, each cube $C_j$ associated with a node of the octree-based structure of projection is considered and the module M1 orthogonally projects the points of the input colored point cloud IPC which are included in a cube $C_j$ onto each of the 6 faces of said cube $C_j$ in order to obtain a pair of a texture image $TI_{i,j}$ and a depth image $DI_{i,j}$ for each of said 6 faces $F_{i,j}$.

In step 310, the module M1 calculates a metric $Q(F_{i,j})$ for each of these 6 pairs of texture/depth images.

According to an embodiment, the metric $Q(F_{i,j})$ is responsive to the ratio of the total number N_total(i,j) of pixels, corresponding to the projection of the part of the input colored point cloud included in the cube $C_j$, over the number N_new(i,j) of newly seen points. A point is considered as being "newly seen" when the point has not been projected on a previously selected face.

If no new point is seen by the projection of the part of the input colored point cloud onto a face $F_{i,j}$, said ratio becomes infinite. On the contrary, if all points are new, this ratio is equal to 1.

According to another embodiment, the metric $Q(F_{i,j})$ is the average number N_neighbor(i,j) of present neighbors per pixel of the texture ($TI_{i,j}$) (and/or depth ($DI_{i,j}$)) image associated with the face $F_{i,j}$.

According to a variant, a same "background" color is assigned to each non-present neighbor of a pixel of the texture ($TI_{i,j}$) (and/or depth ($DI_{i,j}$)) image associated with the face $F_{i,j}$. A neighbor of a pixel is then considered as being present when its value is not equal to a specific "background" value.

This variant allows a very quickly implementation of the metric $Q(F_{i,j})$ because the number N_neighbor(i,j) is provided by just averaging the neighbor pixels (in the depth map for example) that do not equal to the specific "background" value (for example 0), the number N_total is the number of depth map pixels (for example) that are not equal to said specific "background" value, and the number N_new is the number of depth map pixels (for example) that are not equal to said specific "background" value and that has not been projected on a previously selected face.

According to an embodiment, the metric $Q(F_{i,j})$ is responsive to the average number N_neighbor(i,j) of present neighbors per pixel and a ratio of the number N_new(i,j) of newly seen points over the total number N_total(i,j) of pixels corresponding to the projection of the part of the input colored point cloud included in the cube $C_j$.

According to an embodiment, the metric $Q(F_{i,j})$ estimates the cost for encoding each pixel of the texture ($TI_{i,j}$) and depth ($DI_{i,j}$) images taking into account the average number N_neighbor(i,j) of present neighbors per pixel and the ratio N_new(i,j)/N_total(i,j).

According to an embodiment, the metric $Q(F_{i,j})$ is given by:

$$Q(F_{i,j}) = f_{QP}(N\_neighbor(i,j)) * N\_total(i,j) / N\_new(i,j)$$

where $f_{QP}$ is a decreasing function, defined on [0,8] and normalized such that $f_{QP}(8) = 1$.

According to an embodiment, the shape of the decreasing function $f_{QP}$ depends on the coding parameter QP used for 3D-HEVC depth coding, and is found empirically.

Said function models the cost Lagrange function $C = D + \lambda R$ normalized to the case of a "normally full" image with N_neighbor = 8. Therefore, **Q** is representative of the "cost per newly seen point".

In step 320, the module M1 selects a face $F_{i,j}$ when the metric $Q(F_{i,j})$ is lower than or equal to a threshold Q_acceptable:

$$Q(F_{i,j}) \leq Q\_acceptable$$

Then, none or at least one face may be selected per cube.

According to an embodiment, the threshold Q_acceptable may be a given encoding parameter.

According to an example, the optimal value for Q_acceptable may depend on the QP parameter used as input parameter to the video encoder applied at step 130 in the module ENC1. This QP parameter is, for instance, as defined in the AVC or HEVC specification.

Using the above described metric $Q(F_{i,j})$, a possible value is Q_acceptable=2, stating that at least half the projected point should be new to select a projection. It is understood that these examples are not restricted to this specific value that is provided as example only.

According to an optional variant of the method of **Fig. 3,** in step 330, the module M1 removes isolated pixels in the texture and/or depth images associated with a face $F_{i,j}$ before calculating the metric, i.e. before determining if a face $F_{i,j}$ is selected or not.

Basically, projected points difficult to code are those with no (isolated points) or a few (boundary of objects) neighbors. Due to the block-based architecture of video codecs, the cost for coding an isolated point may be considered as being to high. Consequently, it is advantageous to remove the isolated points from the texture (and/or depth) image associated with a face $F_{i,j}$.

According to an embodiment, removing isolated pixels in a texture (and depth) image is based on an analysis of the depth map.

For example, for each pixel of the depth map, that corresponds to a projected point, the number N of pixels (among the 8 neighboring pixels) that have an absolute depth difference lower or equal to a given threshold th_clean is computed. If N is lower than another given threshold N_clean, then the point is detected as to be isolated.

According to a variant, when a pixel is considered as being isolated, a specific value is set in the depth map, for example 0, and a specific "background" color is set on the texture image, for example R=G=B=512 (gray color) when the color of a pixels is represented in the 10-bit RGB color space.

According to an embodiment, removing isolated pixels in a texture (and depth) image is applied iteratively for a given number of N_loop_clean iterations, thus planing isolated islands of pixels until they vanish.

**Fig. 4** shows a diagram of the sub-steps of the step 130 in accordance with an embodiment of the present principles.

In step 400, the encoder ENC1 packs the texture images {TIi,j} relative to the octree-based structure of projection into a composite texture image TI and their associated depth images {DIi,j}} into a composite depth image DI.

In step 410, the encoder ENC1 encodes the composite texture image TI and the composite depth image DI.

The encoded composite texture image TI and the encoded composite depth image DI may be stored and/or transmitted in the bitstream F2.

**Fig. 5** illustrates an example of an octree-based structure of projection (on left) in which an initial cube has been split twice recursively. Only 1 sub-cube of depth 1 and 1 sub-cube of depth 2 are shown with a selected face in grey. On the right, a composite image (texture or depth) is shown according to a packing example.

According to an embodiment of step 400, the packing process starts from an empty composite texture and depth images of predetermined size. The packing is obtained by selecting iteratively, for each of the texture and depth images, a free area in said composite images, said area being big enough to receive said images without overlapping precedingly packed images.

It is understood that the packing process is not necessarily related to normative tools usually called "frame packing" as defined in the specification of video codecs, like HEVC for instance.

According to an embodiment of step 130, the encoder ENC1 is 3D-HEVC compliant (see Annex J of the HEVC specification on coding tools dedicated to the depth). Such an encoder can natively code jointly a texture and its associated depth, with a claimed gain of about 50% in term of compression performance of the depth video. The texture image is backward compatible with HEVC and, consequently, is compressed with the same performance as with the classical HEVC main profile.

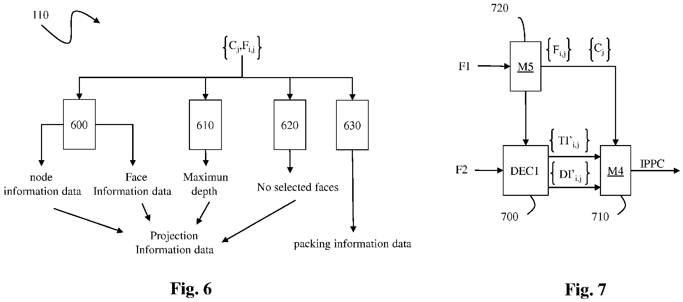

**Fig. 6** shows a diagram of the sub-steps of the step 110 in accordance with an embodiment of the present principles.

In step 600, the module M2 encodes a node information data for each cube of the octree-based structure of projection, indicating whether a cube associated with a node is split or not, and a face information data indicating which face(s) of a cube(s) is (are) used for the projection(s).

According to an embodiment, illustrated on **Fig. 2,** the node information data is a binary flag equal to 1 to indicate that a cube associated with a node is split and to 0 otherwise, and the face information data is a 6-bits data, each bit equals 1 to indicate that a face is used for a projection and 0 otherwise.

According to an optional variant, in step 610, the module M2 also encodes a maximum depth of the cube splitting.

This avoids signaling the node information data for all cubes having the maximum depth.

According to another optional variant, in step 620, the module M2 encodes a single binary data to indicate that none of the faces of a cube is used for projection.

Thus, according to this variant, if at least one face of a cube is used for projection, then a single flag 1 is coded in the projection information data, followed by the face information data (for example the 6 flags indicating which faces are used).

According to another optional variant, in step 630, the module M2 encodes a packing information data representative of the packing of the texture images {TIi, j } relative to the octree-based structure of projection into a composite texture image TI and their associated depth images {DIi,j)} into a composite depth image DI. Said packing information data may define the spatial locations and size area used for each texture and depth image.

According to an embodiment, the projection information data and/or the packing information data may be coded using an entropy coder like CABAC (a description of the CABAC is found in the specification of HEVC at http://www.itu.int/rec/T-REC-H.265-201612-I/en). For instance, a context may be used to code the 6 flags per cube because usually (except for the biggest cube) only a few projections are used and these flags are 0 with high probability.

**Fig. 7** shows schematically a diagram of the steps of the method for decoding, from at least one bitstream, a colored point cloud representing the geometry and colors of a 3D object in accordance with an example of the present principles.

In step 700, a decoder DEC1 decodes, from the bitstream F2, the set $\{TI_{i,j}\}$ of at least one encoded texture images and the set $\{DI_{i,j}\}$ of at least one encoded depth images to obtain the set $\{TI'_{i,j}\}$ of decoded texture images and the set $\{DI'_{i,j}\}$ of decoded depth images.

In step 710, a module M4 obtains an inverse-projected colored point cloud IPPC by orthogonally inverse-projecting the set $\{TI'_{i,j}\}$ of at least one decoded texture images and the set $\{DI'_{i,j}\}$ of at least one decoded depth images, said inverse-projection being driven by projection information data representative of an octree-based structure of projection and representative of at least one selected faces $F_{i,j}$ of cubes $C_j$ of said octree-based structure of projection.

Said orthogonal inverse projection is the reciprocal process (only for projected points) used in step 120 and driven by the same projection information data as used in step 120.

The orthogonal inverse projection, from a face of a cube, determines inverse projected 3D points in the cube from texture and depth images. The resolution of the face may be identical to the cube resolution, for instance points in a 16x16x16 cube are projected on a 16x16-pixel image. By permutation of the axes, one may assume without loss of generality that the face is parallel to the XY plane. Consequently, the depth (i.e. the distance to the face) of a point may be representative of the component Z of the position of inverse projected point. The face is then located at the value Zface of the Z coordinate, and the cube is located at Z greater than Zface. Practically, the value Zface, the origin for X and Y for the face, as well as the cube position relatively to the face, are obtained from the projection information data.

A loop on all pixels of the depth image is performed. For each pixel at position (X,Y) and depth value V, if the value V is strictly positive, then an inverse projected 3D points may be obtained at location (X,Y, Zface +V - D) and the color of the pixel at position (X,Y) in the texture image may be associated to said points. The value D may be the same positive offset as used in the projection process.

The orthogonal inverse projection process is not limited to the above described process that is provided as an exemplary embodiment only.

By orthogonally inverse projecting several decoded texture and depth images, it may happen that two or more inverse projected 3D points belong to exactly the same position of the 3D space. In this case, said points are replaced by only one point, at said position, whose color is the average color taken on all said inverse projected 3D points.

According to an embodiment of step 700, the decoder DEC1 is 3D-HEVC compliant.

According to an embodiment of steps 700, the decoder DEC1 decodes an encoded composite texture image TI and an encoded composite depth image DI, to get the decoded composite texture image TI' and the decoded composite depth image DI', and unpacks the decoded texture images {TI'i, j } and the decoded depth images {DI'i, j) } relative to the cubes C$_j$ of an octree-based structure of projection from said decoded composite texture image TI' and the decoded composite depth image DI' according to packing information data.

The unpacking process is the reciprocal of the packing process performed in step 400 and is driven by packing information data in order to define the area related to each decoded texture TI'i, j and depth DI'i, j image in the decoded composite images. Then, said areas are extracted from said frames to obtain the decoded texture images and the depth images associated to said projections.

Optionally , in step 720, a module M5 decodes, from the bitstream F1, projection information data representative of the set of selected faces.

In a variant of step 720, the module M5 decodes, from the bitstream F1, projection information data representative of the octree-based structure of projection.

Optionally, in step 720, the module M5 decodes, from the bitstream F1, a packing information data representative of the packing of texture images {T'li,j} into the decoded composite texture image (TI) and the depth images {DI'i,j)} into the decoded composite depth image (DI).

On **Fig. 1-7,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

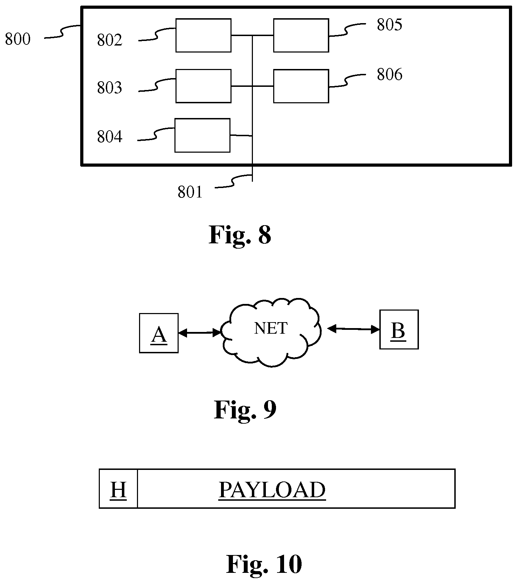

**Fig. 8** represents an exemplary architecture of a device 800 which may be configured to implement a method described in relation with **Fig. 1-7.**

Device 800 comprises following elements that are linked together by a data and address bus 801:

- a microprocessor 802 (or CPU), which is, for example, a DSP (or Digital Signal Processor);
- a ROM (or Read Only Memory) 803;
- a RAM (or Random Access Memory) 804;
- an I/O interface 805 for reception of data to transmit, from an application; and
- a battery 806.

In accordance with an example, the battery 806 is external to the device. In each of mentioned memory, the word « register » used in the specification can correspond to area of small capacity (some bits) or to very large area (e.g. a whole program or large amount of received or decoded data). The ROM 803 comprises at least a program and parameters. The ROM 803 may store algorithms and instructions to perform techniques in accordance with present principles. When switched on, the CPU 802 uploads the program in the RAM and executes the corresponding instructions.

RAM 804 comprises, in a register, the program executed by the CPU 802 and uploaded after switch on of the device 800, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the orginal colored point cloud IPC is obtained from a source. For example, the source belongs to a set comprising:

- a local memory (803 or 804), e.g. a video memory or a RAM (or Random Access Memory), a flash memory, a ROM (or Read Only Memory), a hard disk;
- a storage interface (805), e.g. an interface with a mass storage, a RAM, a flash memory, a ROM, an optical disc or a magnetic support;
- a communication interface (805), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

In accordance with an example of the decoding or a decoder, the reconstructed colored point cloud CPC is sent to a destination; specifically, the destination belongs to a set comprising:

- a local memory (803 or 804), e.g. a video memory or a RAM, a flash memory, a hard disk;
- a storage interface (805), e.g. an interface with a mass storage, a RAM, a flash memory, a ROM, an optical disc or a magnetic support;
- a communication interface (805), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples of encoding or encoder, at least one of bitstreams F1-F2 is sent to a destination. As an example, at least one of bitstreams F1-F2 is stored in a local or remote memory, e.g. a video memory (804) or a RAM (804), a hard disk (803). In a variant, at least one of bitstreams F1-F2 is sent to a storage interface (805), e.g. an interface with a mass storage, a flash memory, ROM, an optical disc or a magnetic support and/or transmitted over a communication interface (805), e.g. an interface to a point to point link, a communication bus, a point to multipoint link or a broadcast network.

In accordance with examples of decoding or decoder, at least one of bitstreams F1-F2 is obtained from a source. Exemplarily, a bitstream is read from a local memory, e.g. a video memory (804), a RAM (804), a ROM (803), a flash memory (803) or a hard disk (803). In a variant, the bitstream is received from a storage interface (805), e.g. an interface with a mass storage, a RAM, a ROM, a flash memory, an optical disc or a magnetic support and/or received from a communication interface (805), e.g. an interface to a point to point link, a bus, a point to multipoint link or a broadcast network.

In accordance with examples, device 800 being configured to implement an encoding method described in relation with **Fig. 1-6,** belongs to a set comprising:

- a mobile device ;
- a smartphone or a TV set with 3D capture capability
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

In accordance with examples, device 2000 being configured to implement a decoding method described in relation with **Fig. 7,** belongs to a set comprising:

- a mobile device ;

- a Head Mounted Display (HMD)
- (mixed reality) smartglasses
- an holographic device
- a communication device ;
- a game device ;
- a set top box;
- a TV set;
- a tablet (or tablet computer) ;
- a laptop ;
- a display
- a sterescopic display and
- a decoding chip.

According to an example of the present principles, illustrated in **Fig. 9,** in a transmission context between two remote devices A and B over a communication network NET, the device A comprises a processor in relation with memory RAM and ROM which are configured to implement a method for encoding a colored point cloud as described in relation with the **Figs. 1-6** and the device B comprises a processor in relation with memory RAM and ROM which are configured to implement a method for decoding as described in relation with **Fig. 7.**

In accordance with an example, the network is a broadcast network, adapted to broadcast encoded colored point clouds from device A to decoding devices including the device B.

A signal, intended to be transmitted by the device A, carries at least one of bitstreams F1-F2.

This signal may thus carry on at least one pair of one texture image $TI_{i,j}$ and one depth image $DI_{i,j}$ obtained by orthogonally projecting points of an input colored point cloud IPC onto a selected face $F_{i,j}$ of an octree-based structure of projection.

According to an embodiment, the signal may also carry projection information data representative of the selected faces and/or representative of the octree-based structure of projection.

According to an embodiment, said projection information data comprises a node information data indicating whether the cube associated with a node of the octree-based structure of projection is split or not, and a face information data indicating which face(s) of the cube(s) is (are) used for the projection(s).

According to an embodiment, the node information data is a binary flag equal to 1 to indicate that a cube associated with a node is split and to 0 otherwise, and the face information data is a 6-bits data, each bit equals 1 to indicate that a face is used for a projection and 0 otherwise.

According to an optional variant, the signal also carries a maximum depth of the cube splitting.

According to another optional variant, the signal also carries a single binary data to indicate that none of the faces of a cube is used for projection.

According to an embodiment, the signal carries a composite texture image TI' and a composite depth image DI' obtained by packing at least one texture images $\{TI_{i,j}\}$ and at least one depth images $\{DI_{i,j}\}$.

According to an embodiment, the signal may also carry packing information data representative of the packing of at least one texture images {TIi,j} into a composite texture image TI and the depth images {DIi,j)} into the composite depth image DI.

**Fig. 10** shows an example of the syntax of such a signal when the data are transmitted over a packet-based transmission protocol. Each transmitted packet P comprises a header H and a payload PAYLOAD.

According to embodiments, the payload PAYLOAD may comprise at least one of the following elements:

- bits that represent at least one pair of one texture image $TI_{i,j}$ and one depth image $DI_{i,j}$;
- a binary flag that indicates if a cube associated with a node of an octree-based structure of projection is split or not;
- a 6-bits data that indicates which faces of a cube are selected;
- bits representing projection information data;
- bits representing packing information data.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding an input colored point cloud representing the geometry and colors of a 3D object comprising:

    - determining (100) which faces ($F_{i,j}$) of cubes ($C_j$) of an octree-based structure of projection are selected according to the orthogonal projections of the input colored point cloud onto these faces;
    - obtaining (120) a pair of one texture image ($TI_{i,j}$) and one depth ($DI_{i,j}$) image for each of the selected faces ($F_{i,j}$) by orthogonally projecting, onto a selected face ($F_{i,j}$) of a cube ($C_j$), the part of the input colored point cloud included in said cube ($C_j$); and
    - encoding (130) the texture images ($\{TI_{i,j}\}$) and the depth images ($\{DIi,j\}$).

2. A device for encoding an input colored point cloud the geometry and colors of a 3D object comprising means for:

    - determining which faces ($F_{i,j}$) of cubes ($C_j$) of an octree-based structure of projection are selected according to the orthogonal projections of the input colored point cloud onto these faces;
    - obtaining a pair of one texture image ($TI_{i,j}$) and one depth ($DI_{i,j}$) image for each of the selected faces ($F_{i,j}$) by orthogonally projecting, onto a selected face ($F_{i,j}$) of a cube ($C_j$), the part of the input colored point cloud included in said cube ($C_j$); and
    - encoding the texture images ($\{TI_{i,j}\}$) and the depth images ($\{DI_{i,j}\}$).

3. The method of claim 1 or the device of claim 2, wherein a face ($F_{i,j}$) of a cube ($C_j$) is based on a metric ($Q(F_{i,j})$) representative of the capability of a texture ($TI_{i,j}$) and a depth ($DI_{i,j}$) images associated with said face ($F_{i,j}$) to efficiently compress the projection of the points of the input colored point cloud which are included in the cube ($C_j$), onto the

face ($F_{i,j}$).

4. The method of claim 1 or 3 or the device of claim 2 or 3, wherein the method also comprises a step of or the device comprises means for encoding (110) projection information data representative of the set of selected faces and/or representative of the octree-based structure of projection.

5. The method or device of claim 4, wherein projection information data comprises a node information data indicating whether a cube associated with a node of the octree-based structure of projection is split or not, and a face information data indicating which face(s) of a cube(s) is (are) used for the projection(s).

6. The method of one of the claims 1, 3-5 or a device of one of the claims 2-5, wherein encoding (130) the texture images ($\{TI_{i,j}\}$) and the depth images ($\{DI_{i,j}\}$) comprises packing (400) the texture images {TIi,j} into a composite texture image (TI) and the depth images {DIi,j}) into a composite depth image (DI), and encoding (410) the composite texture and depth images.

7. The method or the device of claim 6, wherein the method also comprises a step (630) of or the device also comprises means for encoding (630) a packing information data representative of the packing of the texture images {TIi,j} into the composite texture image (TI) and the depth images {DIi,j}} into the composite depth image (DI).

8. A method for decoding a colored point cloud representing the geometry and colors of a 3D object from at least one bitstream, comprising:

- decoding (700), from a bitstream, at least one encoded texture images ($\{TI_{i,j}\}$) and at least one encoded depth images ($\{DI_{i,j}\}$) to obtain at least one decoded texture images ($\{TI'_{i,j}\}$) and at least one decoded depth images ($\{DI'_{i,j}\}$); and
- obtaining (710) an inverse-projected colored point cloud (IPPC) by orthogonally inverse-projecting said at least one decoded texture images ($\{TI_{i,j}\}$) and said at least one decoded depth images ($\{DI_{i,j}\}$), said inverse-projection being driven by projection information data representative of an octree-based structure of projection and representative of at least one selected faces ($F_{i,j}$) of cubes ($C_j$) of said octree-based structure of projection.

9. A device for decoding a colored point cloud representing the geometry and colors of a 3D object from at least one bitstream, comprising means for:

- decoding, from a bitstream, at least one encoded texture images ($\{TI_{i,j}\}$) and at least one encoded depth images ($\{DI_{i,j}\}$) from a bitstream to obtain at least one decoded texture images ($\{TI'_{i,j}\}$) and at least one decoded depth images ($\{DI'_{i,j}\}$); and
- obtaining an inverse-projected colored point cloud (IPPC) by orthogonally inverse-projecting said at least one decoded texture images ($\{TI_{i,j}\}$) and said at least one decoded depth images ($\{DI_{i,j}\}$), said inverse-projection being driven by projection information data representative of an octree-based structure of projection and representative of at least one selected faces ($F_{i,j}$) of cubes ($C_j$) of said octree-based structure of projection.

10. The method of claim 8 or the device of claim 9, wherein the method also comprises a step of or the device also comprises means for decoding, from a bitstream, projection information data representative of the set of selected faces and/or representative of the octree-based structure of projection.

11. The method of claim 8 or 10 or a device of claim 9 or 10, wherein decoding (700) at least one encoded texture image ($\{TI_{i,j}\}$) and at least one encoded depth image ($\{DI_{i,j}\}$) comprises decoding a composite texture image (TI) and a composite depth image (DI), and unpacking said at least one decoded texture image ($\{TI'i, j \}$) and said at least one decoded depth image ($\{DI'i,j)\}$) the decoded composite texture image (TI') and the decoded composite depth image (DI') according to packing information data.

12. The method or the device of claim 11, wherein the method also comprises a step or the device also comprises means for decoding said packing information data.

13. A signal carrying on at least one pair of one texture image ($TI_{i,j}$) and one depth image ($DI_{i,j}$) obtained by orthogonally projecting points of an input colored point cloud (IPC) onto a selected face ($F_{i,j}$) of an octree-based structure of projection.

**14.** The signal of claim 13, wherein the signal also carries projection information data representative of the selected faces and/or representative of the octree-based structure of projection.

**15.** The signal of claim 13 or 14, wherein the signal also carries packing information data representative of the packing of at least one texture images ($\{TIi, j\}$) into a composite texture image (TI) and the depth images ($\{DIi,j\}$) into the composite depth image (DI).

**Fig. 1**

**Fig. 2**

100

$C_j$

IPC → 300 → $\left\{ (TI_{i,j},\, DI_{i,j}) \right\}$ → 330 → 310 → $\left\{ Q(F_{i,j}) \right\}$ → 320 → $\left\{ F_{i,j} \right\}$

**Fig. 3**

130

$\left\{ TI_{i,j} \right\}$ → 400

$\left\{ DI_{i,j} \right\}$ → 400

400 → TI → 410

400 → DI → 410

410 → F2

410 → F1

**Fig. 4**

$2^{l_i} \times 2^{l_i}$

$2^{l_{i+1}} \times 2^{l_{i+1}}$

$2^{l_{i+2}} \times 2^{l_{i+2}}$

**Fig. 5**

$\{C_j, F_{i,j}\}$

600

node
information data

Face
Information data

610

Maximun
depth

620

No selected faces

630

Projection
Information data

packing information data

110

**Fig. 6**

720

$\{F_{i,j}\}$ $\{C_j\}$

F1 → M5

F2 → DEC1

$\{TI'_{i,j}\}$

$\{DI'_{i,j}\}$

M4 → IPPC

700

710

**Fig. 7**

800

802    805

803    806

804

801

**Fig. 8**

A ⟷ NET ⟷ B

**Fig. 9**

| H | PAYLOAD |
|---|---------|

**Fig. 10**

Europäisches
Patentamt

European
Patent Office

Office européen
des brevets

# EUROPEAN SEARCH REPORT

Application Number

EP 17 30 5929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 321 894 A2 (SAMSUNG ELECTRONICS CO LTD [KR]) 25 June 2003 (2003-06-25) <br> * abstract; figures 2, 4, 20, 24 * <br> * paragraphs [0008] - [0015], [0038] - [0042], [0066], [0067], [0083] * <br> * paragraphs [0116] - [0129], [0149], [0150], [0171] - [0175], [0204] - [0207], [0218], [0234] * <br> ----- | 1-15 | INV. <br> H04N19/597 <br> G06T17/00 <br> G06T17/10 <br> G06T9/40 <br> H04N19/96 |
| Y | EP 1 271 410 A2 (SAMSUNG ELECTRONICS CO LTD [KR]) 2 January 2003 (2003-01-02) <br> * abstract; figure 1 * <br> * paragraphs [0001] - [0005], [0018] - [0024], [0034] - [0041] * <br> ----- | 1-15 | |
| A | ISO/IEC JTC1/SC29/WG1: "Technical report of the joint ad hoc group for digital representations of light/sound fields for immersive media applications", <br> 72. JPEG MEETING;29-5-2016 - 3-6-2016; GENEVA; (JOINT PICTURE EXPERT GROUP OR ISO/IEC JTC1/SC29/WG1); URL: HTTPS://WWW.ISO.ORG,, <br> no. wg1m72019, <br> 14 December 2016 (2016-12-14), XP030190125, <br> * pages 31, 32, * <br> ----- | 1-15 | |
| A | RICARDO L DE QUEIROZ ET AL: "Motion-Compensated Compressionof Dynamic Voxelized Point Clouds", <br> MPEG 115TH MEETING GENEVA, ATTACHED TO INPUT DOCUMENT M38675, <br> 25 May 2016 (2016-05-25), XP055395321, <br> * the whole document * <br> ----- <br> -/-- | 1-15 | TECHNICAL FIELDS SEARCHED (IPC) <br><br> H04N <br> G06T |

The present search report has been drawn up for all claims

| Place of search | Date of completion of the search | Examiner |
|---|---|---|
| Munich | 13 October 2017 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 17 30 5929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHA ZHANG ET AL: "Point cloud attribute compression with graph transform", 2014 IEEE INTERNATIONAL CONFERENCE ON IMAGE PROCESSING (ICIP), IEEE, 27 October 2014 (2014-10-27), pages 2066-2070, XP032966955, DOI: 10.1109/ICIP.2014.7025414 [retrieved on 2015-01-28] * the whole document * | 1-15 | |

-----

TECHNICAL FIELDS
SEARCHED        (IPC)

The present search report has been drawn up for all claims

| Place of search | Date of completion of the search | Examiner |
|---|---|---|
| Munich | 13 October 2017 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5929

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2017

| Patent document cited in search report | | | Publication date | Patent family member(s) | | | Publication date |
|---|---|---|---|---|---|---|---|
| EP 1321894 | A2 | | 25-06-2003 | CA | 2413056 | A1 | 27-05-2003 |
| | | | | CN | 1432969 | A | 30-07-2003 |
| | | | | EP | 1321894 | A2 | 25-06-2003 |
| | | | | JP | 3957620 | B2 | 15-08-2007 |
| | | | | JP | 4629005 | B2 | 09-02-2011 |
| | | | | JP | 2003296755 | A | 17-10-2003 |
| | | | | JP | 2006318503 | A | 24-11-2006 |
| EP 1271410 | A2 | | 02-01-2003 | CA | 2391673 | A1 | 29-12-2002 |
| | | | | CN | 1395222 | A | 05-02-2003 |
| | | | | EP | 1271410 | A2 | 02-01-2003 |
| | | | | ES | 2351961 | T3 | 14-02-2011 |
| | | | | JP | 3840150 | B2 | 01-11-2006 |
| | | | | JP | 2003051026 | A | 21-02-2003 |
| | | | | KR | 20030002995 | A | 09-01-2003 |
| | | | | RU | 2216781 | C2 | 20-11-2003 |
| | | | | US | 2003001838 | A1 | 02-01-2003 |

EPO FORM P0459

For more details about this annex : see Official Journal of the European Patent Office, No. 12/82